**Europäisches Patentamt**

**European Patent Office**

**Office européen des brevets**

(11) Veröffentlichungsnummer: **0 358 816 B1**

# (12) EUROPÄISCHE PATENTSCHRIFT

(45) Veröffentlichungstag der Patentschrift: **18.03.92**

(21) Anmeldenummer: **88201996.1**

(22) Anmeldetag: **14.09.88**

(51) Int. Cl.⁵ **C04B 24/26**, C04B 16/04, C04B 40/00

(54) Verfahren zur Herstellung eines gegenüber einer organischen Flüssigkeit undurchlässigen Betons.

(43) Veröffentlichungstag der Anmeldung:
**21.03.90 Patentblatt 90/12**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**DE-B- 1 134 328**
**US-A- 2 491 487**
**US-A- 4 398 957**

**CHEMICAL ABSTRACTS, Band 105, Nr. 14, Oktober 1986, Seite 302, Zusammenfassung Nr. 119703h, Columbus, Ohio, US; & JP-A-61 86 484 (TOYO SODA MFG. CO. LTD) 01-05-1986**

(73) Patentinhaber: **Verein Deutscher Zementwerke e. V.**
**Tannenstrasse 2**
**W-4000 Düsseldorf 30(DE)**

(72) Erfinder: **Grube, Horst, Dr. Ing.**
**Spindecksfeld 64**
**W-4030 Ratingen 6(DE)**

(74) Vertreter: **Ackmann, Günther, Dr.-Ing. Patentanwalt**
**Karl-Lehr-Strasse 7**
**W-4100 Duisburg 1(DE)**

## Beschreibung

Die Erfindung betrifft ein Verfahren zur Herstellung eines gegenüber einer organischen Flüssigkeit undurchlässigen Betons.

Zum Schutze des Bodens und Grundwassers vor umweltschädlichen Stoffen, insbesondere organischen Flüssigkeiten, werden auf industriellen Flächen Schutzbauwerke aus Beton in Form von Behältern, Auffangtassen, Faßlagerböden, Hallenböden o. dgl. errichtet, die im Gebrauchsfalle vorübergehend den umweltschädlichen Stoffen ausgesetzt sind. Sie werden zum Auffangen und zur Zwischenlagerung der Flüssigkeiten aus leckgewordenen Behältern, Rohrleitungen oder Produktionsanlagen verwendet, dienen aber auch der Zwischenlagerung von Löschwasser oder Reinigungswasser, das mit umweltschädlichen Stoffen kontaminiert ist. Für diesen Zweck muß der Beton ausreichend dicht sein. Bekanntlich weist aber der hydratisierte Zementstein im Beton ein Porengefüge auf, welches für Flüssigkeiten nicht vollständig undurchlässig ist. Zur Verringerung des flüssigkeitsdurchlässigen Porenanteils im Beton kann bei dessen Herstellung ein möglichst kleiner Wasserzementwert gewählt und ein hoher Hydrationsgrad durch eine Nachbehandlung vorgesehen werden. Außerdem ist es bekannt, der Betonmischung Betondichtungsmittel zuzumischen, welche während des Erhärtungsprozesses mit Bestandteilen des Zements reagieren und einen die Kapillarporen verschließenden Niederschlag bilden sollen. Abgesehen davon, daß durch den Zusatz der bekannten Betondichtungsmittel Einbußen an anderen Betoneigenschaften hinzunehmen sind, läßt sich dadurch kein gegenüber organischen Flüssigkeiten undurchlässiger Beton herstellen. Um Betonbauwerke gegenüber organischen Flüssigkeiten und organischen Lösungsmitteln undurchlässig zu machen, werden in bekannter Weise deren den organischen Flüssigkeiten ausgesetzte Oberflächen mit einer Kunststoffbeschichtung versehen, die gegenüber der organischen Flüssigkeit ausreichend widerstandsfähig ist. Derartige Kunststoffbeschichtungen sind jedoch in der Herstellung teuer und insbesondere bei befahrenen Betonflächen sehr wartungsintensiv.

Demgegenüber liegt der Erfindung die Aufgabe zugrunde, ein Verfahren zur Herstellung eines gegenüber einer organischen Flüssigkeit undurchlässigen Betons zu schaffen, ohne daß es einer Kunststoffbeschichtung bedarf.

Diese Aufgabe wird erfindungsgemäß dadurch gelöst, daß der Betonmischung ein organischer Zusatzstoff zugemischt wird, der mit der auf das Betonbauwerk einwirkenden organischen Flüssigkeit eine die Poren des erhärteten Betons verschließende hochviskose Masse bildet.

Der organische Zusatzstoff bildet, sobald die organische Flüssigkeit einwirkt, eine selbsttätige Abdichtung im erhärteten Beton durch Bildung einer die flüssigkeitsdurchlässigen Poren verschließenden hochviskosen Masse. Der organische Zusatzstoff läßt sich in einfacher Weise in Abhängigkeit von der Art der organischen Flüssigkeit oder des organischen Lösungsmittels, dem das Betonbauwerk ausgesetzt sein soll, auswählen. Es stehen zahlreiche organische Zusatzstoffe zur Verfügung, die mit einer der vorgegebenen organischen Flüssigkeit bzw. einem organischen Lösungsmittel eine hochviskose Masse bilden. Geeignet sind beispielsweise Thermoplaste oder Mischungen aus Thermoplasten, die in der in Betracht kommenden organischen Flüssigkeit bzw. dem organischen Lösungsmittel löslich sind. Zu dieser Stoffgruppe gehören vor allem unvernetzte bis schwach vernetzte Thermoplaste. Sobald die organische Flüssigkeit bzw. das Lösungsmittel mit dem organischen Zusatzstoff in Kontakt kommt, entsteht eine die Poren verschließende zähe Masse, wobei je nach der Art der Stoffe entweder eine Lösung entsteht, deren Viskosität mit zunehmender Porentiefe ansteigt, oder der Zusatzstoff quillt durch intermolekulare Aufnahme der Flüssigkeit. Die hochviskose Masse ergänzt sich selbständig und ist vor mechanischen Einwirkungen geschützt. Verdampft die organische Flüssigkeit auf dem Betonbauwerk, bleibt der organische Zusatzstoff in den Kapillarporen zurück und wird bei einer erneuten Einwirkung einer organischen Flüssigkeit wieder eine abdichtende hochviskose Masse bilden.

Besonders geeignet als Zusatzstoff hat sich beispielsweise Polystyrol gegenüber Chlorkohlenwasserstoffverbindungen, Benzin, Toluol, Xylol gezeigt, das in der Regel gelöst wird und mit zunehmender Porentiefe eine hochviskose Masse bildet. Geeignet ist weiterhin Polyvinylpropionat, das bei Einwirkung dieser organischen Lösungsmittel quillt, sowie Polymethacrylat oder Mischungen aus den genannten organischen Zusatzstoffen. Selbstverständlich sind aber auch andere organische Zusatzstoffe geeignet, welche die geforderten Eigenschaften haben. Ist bekannt, welche organische Flüssigkeit auf das zu erstellende Betonbauwerk einwirken kann, kann der Fachmann einen geeigneten organischen Zusatzstoff ohne weiteres auswählen.

Der organische Zusatzstoff wird in Abhängigkeit von der Art des Zementes in einer Menge von 1 bis 10 Gewichtsprozent des in der Betonmischung enthaltenen trockenen Zements zugemischt. Besonders gute Ergebnisse werden mit einer Menge von 3 bis 5 Gewichtsprozent, bezogen auf das Gewicht des in der Betonmischung enthaltenen trockenen Zements, erzielt. Zweckmäßig wird der organische Zusatzstoff

2

granulatförmig, pulverförmig oder in Form einer wäßrigen Suspension zugemischt.

Zur Abdichtung gegenüber Chlorkohlenwasserstoffverbindungen, Benzin, Toluol, Xylol sind beispielsweise die folgenden Betonmischungen geeignet:

| (a) Zement (HOZ 35L) | 320 | kg/m³ |
|---|---|---|
| Wasser | 160 | kg/m³ |
| Zuschläge (Kies, Sand einschließlich Feinstkorn) | 1850 | kg/m³ |
| Polyvinylpropionat (berechnet mit 4 % Feststoff, zugegeben in einer wäßrigen Suspension) | 12,8 | kg/m³ |
| (b) Zement (HOZ 35L) | 320 | kg/m³ |
| Wasser | 160 | kg/m³ |
| Zuschläge (wie bei (a)) | 1850 | kg/m³ |
| Polystyrol (berechnet mit 4 % Feststoff, pulverförmig zugegeben) | 12,8 | kg/m³ |

Bei beiden Mischungen ist der organische Zusatzstoff als Feststoff in einer Menge von vier Prozent von der zugegebenen Menge an Zement berechnet worden. Zugegeben wurde er im Beispiel (a) in Form einer wäßrigen Suspension, im Beispiel (b) in Pulverform.

**Patentansprüche**

1. Verfahren zur Herstellung eines gegenüber einer organischen Flüssigkeit undurchlässigen Betons, dadurch gekennzeichnet, daß der Betonmischung ein organischer Zusatzstoff zugemischt wird, der mit der auf das Betonbauwerk einwirkenden organischen Flüssigkeit eine die Poren des erhärteten Betons verschließende hochviskose Masse bildet.

2. Verfahren nach Anspruch 1, dadurch gekennzeichent, daß der organische Zusatzstoff aus einem Thermoplast oder aus einer Mischumg aus Thermoplasten besteht, die in der auf das fertige Betonbauwerk einwirkenden organischen Flüssigkeit löslich sind.

3. Verfahren nach Anspruch 1 oder 2, dadurch gekennzeichnet, daß der organische Zusatzstoff aus Polystyrol oder Polyvinylpropionat oder Polymethacrylat oder aus Mischungen daraus besteht.

4. Verfahren nach einem der Ansprüche 1 bis 3, dadurch gekennzeichnet, daß der organische Zusatzstoff in einer Menge von 1 bis 10 Gew.% des in der Betonmischung enthaltenen trockenen Zements zugemischt wird.

5. Verfahren nach Anspruch 4, dadurch gekennzeichnet, daß der organische Zusatzstoff in einer Menge von 3 bis 5 Gew.% des in der Betonmischung enthaltenen trockenen Zements zugemischt wird.

6. Verfahren nach einem der Ansprüche 1 bis 5, dadurch gekennzeichnet, daß der organische Zusatzstoff granulatförmig, pulverförmig oder als wäßrige Suspension zugemischt wird.

**Claims**

1. A process for the preparation of a concrete impervious to an organic liquid, characterised in that there is mixed in with the concrete mixture an organic additive which, together with the organic liquid acting on the concrete structure, forms a high-viscosity substance which closes the pores of the set concrete.

2. A process according to claim 1, characterised in that the organic additive consists of a thermoplastic or of a mixture of thermoplastics soluble in the organic liquid acting on the finished concrete structure.

3. A process according to claim 1 or 2, characterised in that the organic additive consists of polystyrene or polyvinyl propionate or polymethacrylate or mixtures thereof.

4. A process according to any one of claims 1 to 3, characterised in that the organic additive is mixed in with the concrete mixture in a quantity of from 1 to 10% by weight of the dry cement contained in the concrete mixture.

5. A process according to claim 4, characterised in that the organic additive is mixed in with the concrete mixture in a quantity of from 3 to 5% by weight of the dry cement contained in the concrete mixture.

6. A process according to any one of claims 1 to 5, characterised in that the organic additive is mixed in the form of a granulate, powder or aqueous suspension in the concrete mixture.

**Revendications**

1. Procédé de préparation d'un béton imperméable à un liquide organique, caractérisé en ce qu'il consiste à ajouter au mélange de béton un adjuvant organique qui forme, avec le liquide organique agissant sur l'ouvrage en béton, une masse très visqueuse fermant les pores du béton durci.

2. Procédé suivant la revendication 1, caractérisé en ce que l'adjuvant organique est une matière thermoplastique ou un mélange de matières thermoplastiques qui sont solubles dans le liquide organique agissant sur l'ouvrage fini en béton.

3. Procédé selon la revendication 1 ou 2, caractérisé en ce que l'adjuvant organique est en polystyrène ou en poly(propionate de vinyle) ou en polyméthacrylate ou en leur mélange.

4. Procédé suivant l'une des revendications 1 à 3, caractérisé en ce qu'il consiste à ajouter l'adjuvant organique en une quantité représentant de 1 à 10 % du poids du ciment sec contenu dans le mélange de béton.

5. Procédé suivant la revendication 4, caractérisé en ce qu'il consiste à ajouter l'adjuvant organique en une quantité représentant de 3 à 5 % du poids du ciment sec contenu dans le mélange de béton.

6. Procédé suivant l'une des revendications 1 à 5, caractérisé en ce qu'il consiste à ajouter l'adjuvant organique sous forme de granulés, sous forme de poudre ou sous la forme d'une suspension aqueuse.